(19) **Europäisches Patentamt**

**European Patent Office**

**Office européen des brevets**

(11) **EP 1 275 623 A1**

(12) **EUROPEAN PATENT APPLICATION**

(43) Date of publication:
**15.01.2003 Bulletin 2003/03**

(51) Int Cl.7: **C03C 17/00**, H01J 29/86

(21) Application number: **01830456.8**

(22) Date of filing: **09.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **VIDEOCOLOR S.p.A.**
**03012 Anagni (IT)**

(72) Inventors:
• **Abbafati, Angelo**
**00040 Lariano RM (IT)**
• **Cacciotti, Cesare**
**00032 Carpineto RM (IT)**

• **Magnone, Giuseppe**
**03012 Alatri FR (IT)**
• **Delmonte, Mario**
**00034 Colleferro RM (IT)**
• **Manciocco, Guido**
**00034 Colleferro RM (IT)**
• **Bassetto, Remo**
**00034 Colleferro RM (IT)**

(74) Representative: **Klausner, Erich et al**
**c/o Ufficio Internazionale Brevetti**
**Ing. C. Gregorj S.p.A.**
**Via Dogana 1**
**20123 Milano (IT)**

(54) **Method for manufacturing a glass front plate for CRT coated with a both glossy and friction-resistant external layer**

(57) Starting with a coating composition comprising silica derived from the hydrolysis of silanes or alkyl silicate compounds, a solvent, mineral fillers and at least 10% by weight of a polyalkylene glycol, the process comprises the application of a single film of this composition by spin coating, and baking at a temperature not exceeding 200%C.

The film obtained has a specular reflectivity of greater than 80% according to the JIS Z-8741 standard and a scratch resistance rated at least H according to the JIS K-5401 standard.

Application to the production of antistatic and/or absorbent films.

**EP 1 275 623 A1**

## Description

The invention relates to a cathode-ray tube the surface of the glass front panel of which is provided with a functional external film containing silica, for example an antistatic and/or absorbent film.

Document US 5 122 709 (HITACHI) describes the formation of such a film from a coating composition comprising 0.5 to 2% by weight of silica derived from the hydrolysis of alkyl silicate compounds, 60 to 90% by weight of an alcoholic solvent and mineral fillers dispersed in the form of conductive oxide particles.

To obtain this external film, the process according to document US 5 122 709 is carried out according to the following steps:

- application of a liquid film of this composition on the outer surface of the front panel of the cathode-ray tube to be treated, by spraying or by spin coating the said composition;
- drying of the film applied, so as to remove the solvent from the said composition;
- baking of the dried film so as to obtain a glossy and sufficiently resistant film.

Irrespective of the electrical conductivity and/or visible radiation absorption properties which depend on the mineral fillers incorporated into the film, as indicated in the document US 5 122 709, it is desired to achieve:

- a high specular reflectivity of the film (glare effect or glossiness) so as to improve the display resolution of the cathode-ray tube;
- high mechanical strength of the film, especially scratch resistance, since the external film is exposed to the risk of degradation.

Document US 5 122 709 teaches that, by applying a single film of this composition by spin coating, it is necessary to carry out the baking at about 500°C in order to obtain sufficient mechanical strength; however, baking at a temperature as high as this is not conceivable in the manufacture of cathode-ray tubes; conversely, by carrying out the baking below 200°C, a very good reflectivity is obtained but the mechanical strength is insufficient; comparative Example No. 1 of document US 5 122 709 indicates the results obtained after baking at 160°C for 30 minutes, namely a scratch resistance with a rating of less than H according to the standardized JIS K-5401 test and a specular reflectivity of only 80% measured according to the JIS Z-8741 standard.

In general, the specular reflectivity of a glass/air dioptric interface is expressed by the formula

$$(\eta_g - \eta_a)^2/(\eta_g + \eta_a)^2,$$

where $\eta_g$ is the index of the glass and $\eta_a$ is the index of air; with $\eta_g = 1.5$ and $\eta_a = 1.0$, the specular reflectivity is 0.04; thus, the specular reflectivity of the front face of an untreated cathode-ray tube is about 4%; the measurement made on the same surface using a "MICROGLOSS" apparatus of the Byk-Gardner type gives a value of about 95; the 95 value therefore corresponds to a specular reflectivity of 4%; the measurement made on the same surface according to the JIS Z-8741 standard would give a value of approximately 95%.

To obtain an external film providing both high gloss and hardness after baking at a temperature not exceeding 200°C, document US 5 122 709 proposes adding an additional step of applying a protective over-film by spraying.

This additional step increases the production costs.

It is an object of the invention to avoid this drawback and to form an external film providing both high gloss and hardness in a single application step and by baking at a temperature not exceeding 200°C.

For this purpose, the subject of the invention is a process for manufacturing a glass front panel for cathode-ray tubes, coated with a functional external film providing both high gloss and hardness, based on a coating composition comprising at least 0.5% by weight of silica derived from the hydrolysis of silanes or alkyl silicate compounds, at least 50% by weight of solvent and dispersed functional mineral fillers, the said process comprising the application of a film of the said composition on the external surface of the said panel and at least one heat treatment of the said applied film so as to dry and bake it, characterized in that:

- the said composition comprises at least 10% by weight of at least one polyalkylene glycol;
- the said process comprises only a single application step, which is carried out by spin coating; and
- the temperature reached during the at least one heat treatment does not exceed 200°C.

The term "high-gloss film" is understood to mean a film having a high specular reflection and the term "hard film" is understood to mean a scratch-resistant film.

The term "functional mineral filler" is understood to mean particles and/or pigments intended to provide the film with a function, for example an antistatic function and/or an absorbent function.

The process according to the invention is economically advantageous since the coating on the panel comprises only a single film, unlike the process described in the abovementioned document US 5 122 709; by adding a polyalkylene glycol, a film is obtained which provides both high gloss and hardness in a single application step and without exceeding 200°C; application by spin coating is an essential point, since it has been found that application by spraying does not provide the same advantages.

Preferably, the coating composition does not include a mineral acid, unlike the coating composition described in document US 5 122 709 in which a mineral acid such as sulphuric acid, nitric acid or hydrochloric acid is added in order to catalyse the hydrolysis reaction of the alkyl silicates, which are silica precursors.

Thus, a panel is obtained whose surface provided with the film according to the invention has a specular reflectivity of greater than 80% according to the JIS Z-8741 standard and a scratch resistance rated at least H according to the JIS K-5401 standard.

As indicated in Figure 7 of the abovementioned document US 5 122 709, the JIS K-5401 standard makes it possible to rate the scratch resistance of a surface; the possible ratings range from B (the least hard) to 3H (the hardest), passing through the intermediate rating H.

Preferably, a panel is obtained whose surface provided with the film according to the invention passes the resistance test referenced US-MIL-C 0675C and has a specular reflectivity approximately equal to that of the external surface of the said panel before coating according to the invention.

Preferably, the at least one polyalkylene glycol is chosen from the group comprising polyethylene glycols and polypropylene glycols; in practice, polyalkylene glycols of sufficiently low molecular weight are chosen, thereby allowing the deposited film to be baked at a lower temperature.

Preferably, the solvent includes water and the water content in the coating composition is less than or equal to the amount of water needed to completely hydrolyse the silanes or alkyl silicates, thereby making it possible, in combination with the addition of polyalkylene glycols, to obtain a film providing both high gloss and hardness with baking not exceeding 100°C; preferably, the weight content of water is less than or equal to three times the weight content of silica.

According to a first variant, when the film has an antistatic function, the mineral fillers suspended in the composition comprise conductive particles; preferably, these conductive particles are chosen from the group comprising tin oxide ($SnO_2$), indium oxide ($In_2O_3$), antimony oxide ($Sb_2O_3$), mixed tin and/or indium and/or antimony oxides and mixtures of these oxides.

According to a second variant, when the film has an absorbent function, the suspended mineral fillers comprise pigments which absorb visible light; surprisingly, even for an absorbent pigment content of less than or equal to 0.5% by weight in the coating composition, the baked film obtained has a high optical density which gives a transparent glass panel coated with the absorbent film according to the invention a sufficiently low transmittivity in order to improve the display contrast of the cathode-ray tube; this means of improving the contrast is most especially used for the manufacture of cathode-ray tubes with a flat external face, as an alternative to the use of a bulk-tinted glass.

If it is desired to have a film which is both antistatic and absorbent, the above first and second variants are combined.

Preferably, the solvent of the coating composition includes at least one of the compounds from the group comprising methanol, ethanol and propanol; it is advantageous to choose sufficiently volatile solvents which can evaporate immediately after the spin-coating phase, before the heat treatment.

Preferably, the weight content of polyalkylene glycol in the said composition is less than 20%; for higher contents, the properties of the film are degraded.

The subject of the invention is also a glass front panel for cathode-ray tubes, which can be obtained by the process according to the invention, characterized in that it is coated only with a single external film comprising silica, mineral fillers and polyalkylene glycol and characterized in that the said external film has a specular reflectivity of greater than 80% according to the JIS Z-8741 standard and a scratch resistance rated at least H according to the JIS K-5401 standard.

Preferably, this specular reflectivity is approximately equal to that of the external surface of the said panel devoid of the external film.

The invention will be more clearly understood on reading the description which follows, given by way of non-limiting example.

A glass panel intended to serve as the front face of a cathode-ray tube for displaying images is taken; this panel is known to those skilled in the art and will not be described here in detail; the glass of this panel is in this case an untinted transparent glass; after cleaning that surface of this panel to be coated:

- a liquid coating composition is prepared by mixing and dispersing the following components:

  - solvent: 40 to 45% by weight of 1-propanol, 12 to 18% by weight of methanol, 12 to 18% by weight of ethanol and 6 to 9% of water;
  - mineral fillers: 2.5 to 3% by weight of a mixture of silica and conductive particles based on antimony-tin oxide, and 0.1 to 0.5% by weight of a graphite-based absorbent pigment;
  - polyalkylene glycols: 6 to 9% by weight of 1-ethoxy-2-propanol and 6 to 9% by weight of 1-propoxy-2-propanol;

- then a single film of this coating composition is applied to the glass panel to be coated by spin coating at a speed of between 10 and 500 revolutions per minute; the amount of composition applied is generally between 50 and 150 ml, depending on the size of the glass panel; during spin coating, most of the solvent of the composition evaporates; and
- then the composition is dried, to evaporate the remaining solvent, and baked in order to consolidate the film, in a single heat-treatment step at a temperature of around 90°C maintained for 30 to 90 minutes.

According to this method of implementing the process according to the invention, the drying and baking are carried out in a single step, this being economically advantageous.

It has been found that the external surface of the panel thus obtained and provided with the film according to the invention passes the resistance test referenced US-MIL-C 0675C, which would correspond to the 3H rating according to the JIS K-5401 standard.

The external surface of the front panel provided with the film according to the invention has a specular reflectivity of around 95%, measured according to the JIS Z-8741 standard, just as high as that of the same panel untreated and uncoated with the film according to the invention; the surface treated according to the invention therefore has a specular reflectivity approximately equal to that of the external surface of the panel before coating with the external film according to the invention.

The front panel of the cathode-ray tube thus obtained has excellent antistatic properties; charged to a potential of 50 kV, the treated surface completely discharges in less than 5 seconds, whereas the same surface untreated and uncoated remains charged to more than 5kV after 360 seconds.

Surprisingly, although the content of absorbent pigments is less than or equal to 0.5% by weight in the coating composition, the baked film obtained has a high optical density, which gives the treated panel only about 50% of transmittivity in the wavelength range between 400 and 700 nm; this property is particularly advantageous when the function of the film is to reduce the transmittivity of the front panel so as to improve the display contrast of the cathode-ray tube.

By virtue of the low transmittivity and the high specular reflectivity provided by the film according to the invention, the cathode-ray tube front panel thus obtained has overall a TFR (Tube Face Reflectivity) of only 0.062, compared with 0.233 for the untreated front panel without an external coating.

The invention applies to all types of glass panels intended to be used as the front faces of cathode-ray tubes, made equally well of transparent glass (as above), and tinted glass.

Example:

A coating composition having the following composition (the percentages are expressed by weight) was prepared: $SiO_2$: 1.1%; $SnO_2$: 1.5%; mineral pigment: 0.4%; 1-propanol: 45%; ethanol: 15%; methanol: 15%; 1-ethoxypropanol: 7.5%; 1-propoxy-2-propanol: 7.5%; water: 7%; where:

- the silica derived from the hydrolysis of tetraethoxysilane (TEOS) and the tin oxide from the hydrolysis of tin *t*-butoxide; and
- the mineral pigment was graphite powder from Dixon Graphite Mills Inc.

For the purpose of applying this composition to the front face of a cathode-ray tube, the surface to be coated was cleaned using a solvent suitable for cleaning glass; in this case, the product called QUASAR 999 from Drewo S.R.L., via Salaria No.134, Monterotondo, Italy, was used.

After having rotated the front face to be coated on a spin-coating machine at a speed of 50 to 130 revolutions per minute, 50 to 150 ml of this coating composition was applied for 5 to 20 seconds to this rotating front face, and then the rotation was speeded up to 150 to 200 revolutions/minute for 45 to 120 seconds.

Next, the coating applied was baked at 90°C for 30 to 90 minutes.

The coated surface thus obtained had the following properties:

- specular reflectivity: 95 measured using a "MICROGLOSS" apparatus of the Byk-Gardner type;
- no deterioration after the US-MIL-C 0675C abrasion test;
- surface electrical resistivity of around $10^9 \Omega/\square$;
- no deterioration after an environmental test comprising the following steps: 4 h at 20°C and 50% relative humidity; then 4 h at 75°C and 80% relative humidity; then 16 h at 75°C and 50% relative humidity.

The surface treated according to the invention therefore had a specular reflectivity approximately equal to that of the external surface of the said panel before coating with the external film according to the invention and a scratch resistance rated at least H according to the JIS K-5401 standard.

## Claims

1. Process for manufacturing a glass front panel for cathode-ray tubes, coated with a functional external film providing both high gloss and hardness, based on a coating composition comprising at least 0.5% by weight of silica derived from the hydrolysis of silanes or alkyl silicate compounds, at least 50% by weight of solvent and dispersed functional mineral fillers, the said process comprising the application of a film of the said composition on the external surface of the said panel and at least one heat treatment of the said applied film so as to dry and bake it, **characterized in that**:

   - the said composition comprises at least 10% by weight of at least one polyalkylene glycol;

- the said process comprises only a single application step, which is carried out by spin coating; and

- the temperature reached during the at least one heat treatment does not exceed 200°C.

2. Process according to Claim 1, **characterized in that** the said coating composition does not include an added mineral acid.

3. Process according to either of Claims 1 and 2, **characterized in that** the said baked film has a specular reflectivity of greater than 80% according to the JIS Z-8741 standard and a scratch resistance rated at least H according to the JIS K-5401 standard.

4. Process according to Claim 3, **characterized in that** the said baked film has a specular reflectivity approximately equal to that of the external surface of the said panel before coating and passes the resistance test referenced US-MIL-C 0675C.

5. Process according to any one of Claims 1 to 4, **characterized in that** at least one polyalkylene glycol is chosen from the group comprising polyethylene glycols and polypropylene gylcols.

6. Process according to any one of Claims 1 to 5, **characterized in that** the said solvent includes water and **in that** the water content in the said composition is less than or equal to the amount of water needed to completely hydrolyse the said silanes or alkyl silicates, and **in that** the temperature reached during the at least one heat treatment does not exceed 100°C.

7. Process according to Claim 6, **characterized in that** the said weight content of water is less than or equal to three times the weight content of silica in the said composition.

8. Process according to any one of Claims 1 to 7, **characterized in that** the said mineral fillers comprise conductive particles.

9. Process according to any one of Claims 1 to 8, **characterized in that** the said mineral fillers comprise pigments which absorb visible light.

10. Process according to any one of Claims 1 to 9, **characterized in that** the said solvent comprises at least one of the compounds from the group comprising methanol, ethanol and propanol.

11. Process according to any one of Claims 1 to 10, **characterized in that** the weight content of polyalkylene glycol in the said composition is less than 20%.

12. Glass front panel for cathode-ray tubes, which can be obtained by the process according to any one of the preceding claims, **characterized in that** it is coated only with a single external film comprising silica, mineral fillers and polyalkylene glycol and **characterized in that** the said external film has a specular reflectivity of greater than 80% according to the JIS Z-8741 standard and a scratch resistance rated at least H according to the JIS K-5401 standard.

13. Glass front panel for cathode-ray tubes, according to Claim 12, **characterized in that** the said external film has a specular reflectivity approximately equal to that of the external surface of the said panel devoid of the external film.

**European Patent**
**Office**

**EUROPEAN SEARCH REPORT**

Application Number

EP 01 83 0456

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 662 961 A (TANITSU KATSUYA ET AL) 2 September 1997 (1997-09-02) * column 2, line 46 - column 5, line 67; example 1 * | 1,3-7, 10-13 | C03C17/00 H01J29/86 |
| A | EP 0 776 925 A (NISSAN CHEMICAL IND LTD) 4 June 1997 (1997-06-04) * page 2, line 48 - page 3, line 49 * | 1-13 | |
| D,A | US 5 122 709 A (KAWAMURA TAKAO ET AL) 16 June 1992 (1992-06-16) * claims * | 1-13 | |
| A | US 5 578 377 A (ABE KEISUKE ET AL) 26 November 1996 (1996-11-26) * column 10, line 1 - column 11, line 13; claims * | 1-13 | |
| | | | TECHNICAL FIELDS SEARCHED (Int.Cl.7) C03C |

The present search report has been drawn up for all claims

| Place of search | Date of completion of the search | Examiner |
|---|---|---|
| THE HAGUE | 26 November 2001 | Van Bommel, L |

**ANNEX TO THE EUROPEAN SEARCH REPORT
ON EUROPEAN PATENT APPLICATION NO.**                    EP 01 83 0456

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2001

| Patent document cited in search report | | Publication date | Patent family member(s) | | Publication date |
|---|---|---|---|---|---|
| US 5662961 | A | 02-09-1997 | JP | 7035914 A | 07-02-1995 |
| | | | JP | 7102214 A | 18-04-1995 |
| | | | US | 5520952 A | 28-05-1996 |
| EP 0776925 | A | 04-06-1997 | EP | 0776925 A2 | 04-06-1997 |
| | | | JP | 9208898 A | 12-08-1997 |
| | | | US | 5800926 A | 01-09-1998 |
| US 5122709 | A | 16-06-1992 | JP | 2247957 A | 03-10-1990 |
| | | | JP | 2757437 B2 | 25-05-1998 |
| | | | JP | 3020939 A | 29-01-1991 |
| | | | JP | 3020940 A | 29-01-1991 |
| | | | CN | 1045892 A ,B | 03-10-1990 |
| | | | KR | 9302658 B1 | 07-04-1993 |
| US 5578377 | A | 26-11-1996 | JP | 7062323 A | 07-03-1995 |
| | | | JP | 7018210 A | 20-01-1995 |

EPO FORM P0459

For more details about this annex : see Official Journal of the European Patent Office, No. 12/82